# EUROPEAN PATENT SPECIFICATION

(11) **EP 1 375 930 B1**
(45) Date of publication and mention of the grant of the patent: **20.04.2005**
(21) Application number: 03013847.3
(22) Date of filing: 18.06.2003
(51) Int. Cl.: F16B 5/02, F16B 41/00, F02F 11/00, F16J 15/06, F16F 1/373

(54) **A vibration and noise dampening connection mechanism for connecting a pair of mechanical components**
Schwingungs- und lärmdämpfender Verbindungsmechanismus zum Befestigen von zwei mechanischen Komponenten
Mécanisme d'amortissement des vibrations et du bruit connectant deux composants mécaniques

(30) Priority: 18.06.2002 US 390030 P
(43) Date of publication of application: 02.01.2004
(73) Proprietor: BRP-Rotax GmbH & Co. KG, 4623 Gunskirchen (AT)
(72) Inventor: Kusel, Rudolf, 4600 Thalheim bei Wels (AT)
(74) Representative: Harringer, Thomas

(56) References cited:
- EP-B- 0 618 385
- US-A- 3 773 142
- US-A- 5 094 579
- US-A1- 2002 054 807

## Description

### BACKGROUND OF THE INVENTION

### Field of the Invention

The present invention relates to a vibration and noise dampening connection mechanism for use in connecting at least two components together. In particular, the present invention relates to a vibration and noise dampening mechanism for use in automotive applications, preferably for connecting components of a drive assembly where it is desirable to limit the transfer of vibration and noise between components. The present invention, however, is not limited to use solely in automotive applications; rather, it is contemplated that the present invention may be used in any environment where it is desirable to control the transmission of noise and vibration. In particular, the present invention is directed to a vibration and noise dampening mechanism that ensures that the transfer of vibration between two components is minimized. The present invention is further directed to a vibration-dampening mechanism having a precise inserted position so that a precise degree of tightness can be achieved and replicated.

### Description of Related Art

It is known to provide sound-dampening connecting elements when connecting two components together when it is desirable to damp out unnecessary noise and vibration. Often a seal is interposed between the two components in order to damp out vibration. In most instances, the connecting element itself comprises a bolt, a plain washer, and a molded body. The molded body is usually formed from an elastomeric material, such as rubber. Typically, the molded body incorporates a central opening and a shoulder-stepped flange that abuts against one outside surface of one component. The provision of the seal ensures that no vibration is directly transferred from one component to the other component. The molded body is provided to limit the indirect transfer of vibration from the first component to the second component through the bolt. A separate collar is often provided between the two components to form a stop for the bolt that is screwed into the second component. Such a collar is disclosed in U.S. Patent No. 4,784,396, U.S. Patent No. 5,255,647, DE 196 54 848 C2, and EP 0 618 385 B1, the latter showing the closest prior-art. This arrangement produces several drawbacks.

When the bolt of the fastener is inserted into the thread aperture of the second component, it can so happen that the seal that is arranged between the two components becomes pinched between the collar of the bolt and second component. This can have an adverse impact on vibration and noise dampening. To avoid this, the bolt may be under-tightened which results in a connection between the two components with less than the required initial tension. As such, the components may not be properly coupled, which may result in increased noise transmission due chatter or rattling between the components. Furthermore, this inability to obtain a required initial tension means that when multiple fasteners are used to secure the two components together, the tension between the components may vary depending upon the tightness of each individual fasteners. As such, the tightness cannot be accurately replicated from fastener to fastener. This may eventually lead to the two components becoming misaligned.

The elastomeric grommet-fastener assembly disclosed in US Patent No. 5,255,647 to Kiczek exhibits the deficiencies identified above. The elastomeric grommet-fastener assembly is used for connecting a valve cover to an automotive engine block that reduces the transmission of engine structural noises and vibration. The fastener assembly includes a fastener head and a shank having a threaded portion. The fastener assembly includes an elastomeric grommet and a washer element. The grommet includes a central passageway and is formed from a molded elastomeric material. The washer element includes a sleeve that passes through the central passageway and is positioned on opposing sides of the grommet. The washer element limits the compression of the grommet. A sealing gasket is provided between the valve cover and the engine block. In operation, the elastomeric grommet is positioned within an opening in the valve cover. The bolt passes through the cover and into an opening in the engine block. The tightening of the bolt compresses the gasket between the valve cover and the engine block. The grommet-fastener assembly of Kiczek suffers numerous drawbacks identified above. The most striking drawback being the inability to control the penetration of the fastener assembly into the engine block. As such, it is possible to over-tighten the fastener assembly such that the gasket is greatly compressed between the valve cover and the engine block. It is also possible to under-tighten the fastener assembly. Like the other fasteners, discussed below, the grommet-fastener assembly requires much dexterity by the assembler to properly adjust, while leaving ample opportunity to improperly install the fastener assembly such that noise and vibration is not reduced.

Others have attempted to avoid these disadvantages. DE 196 54 848 C2 discloses the use of a sleeve that is provided between the fastener bolt, the molded body, and the first component. When tightened, the sleeve rests on the molded body and the second component. The end surface of the sleeve provides an end stop. One important disadvantage of this arrangement is that this vibration-dampening connection takes up a great deal of space. As such, the seal between the two components cannot be positioned as close as may be desired to the screwed connection because of the size of the sleeve and molded body. Furthermore, the sleeve increases the diameter of the hole drilled in the first component.

US Patent No. 4,784,396 to Scott et al. discloses a retaining clip and gasket for an engine subassembly. The clip has a threaded sleeve portion that has a tongue and groove connection with a gasket. The sleeve portion, however, does not limit the penetration of the threaded fastener into the engine. As such, the fastener may be over-tightened, which compresses the gasket, and may lead to leakage. This contact would also have poor vibration dampening properties.

EP 0 618 385 B1 discloses a connection between two components for reducing noise transmission. The connection includes a gasket that is inserted between the components. A sound insulating sleeve extends through an opening in the first component. The sleeve is connected to the gasket using a metal ring. A stepped fastener is provided which limits the movement of the fastener with respect to the second component. The fastener includes a portion that contacts the upper surface of the second component. This arrangement has numerous disadvantages including its complexity, which requires the interconnection of the sleeve and the gasket in addition to a uniquely shaped fastener, which greatly increases cost.

### OBJECTS OF THE INVENTION

It is an object of the present invention to provide a vibration and noise dampening connection mechanism for connecting a two components together while reducing vibration transmission and dampening noise.

It is another object of the present invention to provide a vibration and noise dampening connection mechanism for connecting two components having a simple construction.

It is another object of the present invention to provide a vibration and noise dampening connection mechanism for use in connecting two automotive components together.

It is another object of the present invention to provide a vibration and noise dampening connection mechanism that connects two components with a required initial tension.

It is still another object of the present invention to provide a vibration and noise dampening connection mechanism that connects two components together a required initial tension that can be easily replicated.

It is another object of the present invention to provide a vibration and noise dampening connection mechanism with a single fastening operation.

It is another object of the present invention to provide a vibration and noise dampening connection mechanism for connecting two components with minimal spatial requirements.

It is yet another object of the present invention to provide a vibration and noise dampening connection mechanism for connecting two components that provides for a consistent end stop for a screwed connection.

It is still another object of the present invention to provide a vibration and noise dampening connection mechanism for connecting two components using a bolt having a predetermined mill thread dimension such that the end face of the bolt engages the end of a threaded bore in one component to limit compression of a gasket and ensure the required initial tension.

### SUMMARY OF THE INVENTION

In response to the foregoing challenges, applicants have developed a vibration and noise dampening connection mechanism for securing at least two components together. The vibration and noise dampening connection mechanism in accordance with the present invention is defined by claim 1, so that it includes a first component having at least one first component passageway formed therein. The mechanism further includes a second component having at least one second component passageway formed therein. In accordance with the present invention, it is contemplated that the first component may be a valve cover for an engine. The second component may be a cylinder head for an engine. It, however, is contemplated that the first component and the second component may be any part of an internal combustion engine or drive assembly of a vehicle, especially a recreational vehicle (e.g., an ATV, scooter, motorcycle, snowmobile or personal watercraft). It is also contemplated that the vibration and noise dampening mechanism can be used for featuring an air intake mechanism, especially an air intake manifold, on a cylinder head. It is also contemplated that the vibration and noise dampening mechanism can be used for fastening a throttle body and a throttle sensor to an air intake manifold or for fastening other covers or lids on an engine or drive assembly.

Each second component passageway has a thread formed therein. The thread may be formed by milling, taping or any other suitable manufacturing method. A lower end of the milled thread may form a thread runout. This milled thread ensures that necessary required initial tension can be provided. The mechanism further includes at least one bolt. Each bolt is received in a corresponding passageway in the first and second components to secure the components together. The connection mechanism further includes at least one molded body formed from an elastomeric material. Each molded body is preferably received within a corresponding passageway in the first component. Each molded body has a passageway formed therein for receiving a corresponding bolt. The molded body or washer may be captively connected to the bolt. The molded body may be arranged such that the bolt does not directly contact the first component. The connection mechanism further includes at least one seal member that is at least partially interposed between the first component and the second component. Each seal member may have an opening formed therein for receiving a corresponding bolt. It is also contemplated that the seal can be provided between two screw connections. With this arrangement, no opening is necessary. In accordance with the present invention, the end face of the bolt and a stop in the passageway in the second component cooperate to establish an inserted end position for the vibration and noise dampening connection mechanism. In accordance with the present invention, the stop could be established by a decrease in diameter of the passageway or by an adequate projection within the passageway of the second component or the end of the passageway of the second component (e.g., a frustum-shaped end of the second passageway, i.e., the end of a blind hole in the second component).

In accordance with the present invention, the inserted end position establishes a desired initial tension for the at least one bolt. The desired initial tension between the first component and the second component can be adjusted by adjusting at least one of the depth of the thread and the length of the bolt. The pressing of the molded body and the seal can be determined by the length of the bolt and the stop in the second passageway by measuring the tightening torque of the bolt.

It is also contemplated that vibration and noise dampening connection mechanism in accordance with the present invention may include a stop formed as a projection formed in the second passageway. In accordance with this aspect, the end face of the bolt and the projection within the second component passageway cooperate to establish an inserted end position for the vibration and noise dampening connection mechanism. This provides a predetermined pressing of the seal and the molded body. By providing a stop for the bolt in the second passageway it is possible to fasten the bolt against the stop by a common tool, like for instance a torque driver. The person fastening the bolt will tighten the bolt until a predetermined tightening torque is reached. Thereby a well-defined pressing of the molded body and the seal and a also a secure connection between the two components is established.

In accordance with the present invention, the vibration and noise dampening connection provides a compact screw connection. Other aspects and advantages of the present invention will become apparent from the following detailed description, drawings and claims.

### BRIEF DESCRIPTION OF THE DRAWINGS

The invention will be described in conjunction with the following drawing in which like reference numerals designate like elements and wherein:

Fig. 1 is a vibration and noise dampening connection mechanism between a first and a second component in accordance with the present invention; and

Fig. 2 is an enlarged view of an inserted end position of the bolt of the vibration and noise dampening connection mechanism of Fig. 1.

### DETAILED DESCRIPTION OF A PREFERRED EMBODIMENT OF THE INVENTION

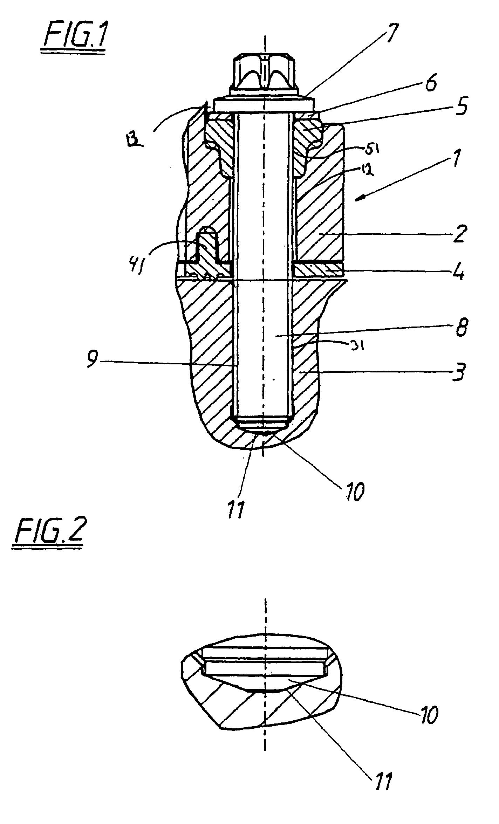

A vibration and noise dampening connection mechanism 1 in accordance with the present invention will now be described in greater in connection with Fig. 1. The vibration and noise dampening connection mechanism 1 is used to connect a first component 2 to a second component 3. In the embodiment illustrated in Fig. 1, the first component 2 is a valve cover and the second component 3 is an engine block or cylinder housing. The present invention, however, is not solely limited to use with valve covers and engine blocks; rather, it is contemplated that other engine and/or vehicle components can be secured together using the connection mechanism 1. Furthermore, the connection mechanism 1 has applications outside the automotive field. It is intended that the connection mechanism 1 can be used in any application where it is desirable to secure a pair of components together to dampen vibration and noise, while providing a reliable simple connection.

Compared to the prior art, the connection mechanism 1 in accordance with the present invention has a relative simple construction, yet provides a highly reliable connection that can be tightened to a required initial tension with relative ease. The connection mechanism 1 includes a seal member 4 that is located between the first and second components 2 and 3. The seal member 4 may take the form of a flexible seal or gasket. As shown in Fig. 1, the seal member 4 may include a projection 41 for securing the seal member 4 to one of the components 2 and 3. In Fig. 1, the seal member 4 is connected to the first component 2. The present invention, however, is not limited to this arrangement; rather, it is contemplated that the seal member 4 may be connected to the second component 3. Furthermore, it is contemplated that an adhesive material may be applied to at least one side of the seal member 4 for purposes of locating the seal member 4 in the desired location between the components 2 and 3. It is also contemplated that the seal member 4 can float between the two components 2 and 3 without the use of a locating projection or adhesive. The seal member 4 positioned between the first component 2 and the second component 3 limits and/or dampens any noise or vibration that may be directly transferred from one component to the other component.

It is important that when the two components 2 and 3 are secured together that the seal member 4 not be compressed too greatly, otherwise the dampening characteristics of the seal member 4 are significantly reduced. The other components of the connection mechanism 1 prevent this occurrence. The first component 2 includes a passageway 12 formed therethrough. One end of the passageway 12 has an enlarged portion 13 for receiving a molded body 5 therein. The molded body 5 serves to limit and dampen the indirect transmission of vibrations and noise from one component to the other component. The molded body 5 is preferably formed from an elastomeric material such as rubber. The molded body 5 includes a passageway 51 extending therethrough. The passageway 51 is aligned with the passageway 12. A washer or ring 6, if such a component is necessary for the purpose of the connection mechanism, is located on side of the molded body 5.

A bolt 8 is positioned with in the passageway 51 and passageway 12 that it extends into an passageway 31 formed in the second component 3. As shown in Fig. 1, the shaft of the bolt 8 is sized such that it does not contact the sides of the passageway 12. With such arrangement, any vibration and noise from the first component 2 cannot be transferred to the second component 3 because the clearance provides a small buffer resp. the transfer of noise and vibration is minimized. The bolt 8 includes a bolt head 7 that is sized to engage the washer 6 located on the molded body 5. With such an arrangement, the bolt 8 and bolt head 7 can be used to secure the first component 2 to the second component 3 without directly contacting the first component 2. The sealing member 4 and the molded body 5 together serve to limit and dampen the transmission of vibration and noise from one component to the other component.

Each passageway 31 in the second component 3 includes a thread 9 that is milled or formed to a precise depth. It is contemplated that multiple passageways 31 and threads 9 will be milled in the second component 3 for receiving multiple bolts 8 around the perimeter to secure the first component 2 to the second component 3. Providing a milled thread ensures a constant inserted depth for the bolt, since a milled thread of this kind can always be manufactured to the same depth with a high level of accuracy, so that the desired, defined screwed connection between the two components is achieved. Furthermore by milling the thread only chips of small size are produced which can be removed from the passageway of the second component easily and thereby do not affect the stop for the bolt face provided therein. The end face 10 of the bolt 8 and a stop formed by the end of the passageway 31 cooperate to establish an inserted end portion. As shown in Figs. 1 and 2, the stop is established by a decrease in diameter of the passageway or by a projection or step formed within the passageway 31. This end position is so located so the desired initial tension is achieved without overly compressing the seal member 4. During installation, the bolt 8 is simply screwed into the passageway 31 of the second component 3. The end faces 10 and 11 serve to limit the downward travel of the bolt 8 so that the desired initial tension can be achieved. This ensures that the seal member 4 and the molded body 5 are sufficiently tight, and that the bolt is securely held in the thread, thereby ensuring a secure connection. It is possible to tighten the bolt 8 in the thread 9 to the point that the bolt 8 cannot work loose during operation. Furthermore, this installation can be achieved with a single tool rather than multiple components used in the prior art. The desired degree of tightness between the two components 2 and 3 can be adjusted by way of the depth or pitch of the thread 9, the length of the bolt 8, and the tension on the bolt 8, which is to say by the amount of torque that is applied to the bolt as it is screwed into the thread.

One important advantage of the connection according to the present invention is that it can be manufactured more simply and cost effectively than the connections described in the prior art, and the connection mechanism 1 requires fewer components. Furthermore, the drilled hole in the components 2 and 3 that are to be screwed together, the molded body 5, and the washer 6 are much smaller than those used in the prior art. This reduction is significant. It permits the seal member 4 and the molded body 5 to be located in close proximity, which reduces the size of the bolt head 7 and the washer 6 without reducing the effectiveness of the compressive forces created by the same. Furthermore, the reduced size of the components of the connection mechanism 1 permits a vibration and noise dampening connection mechanism to be used when connecting smaller components or when space is at a premium. As such, the use of such a connection mechanism 1 would permit the size of the valve cover and cylinder head in an engine to be reduced.

It will be apparent to those skilled in the art that various modifications and variations may be made without departing from the scope of the present invention. For example, the thread on the bolt 8 and the thread 9 in the passageway 31 can be arranged at different locations. Furthermore, the desired degree of tightness between the two components can be adjusted by way of the depth of the thread and the length of the bolt, as well as by the amount of torque that is applied to the bolt when it is tightened down. In order to simplify installation of one component on the other component, and in order to avoid bolts being lost during maintenance operations, at least one of the bolts is anchored in the first component so that it cannot be lost. It is also contemplated that a projection or a step may be provided in the passageway 31 of the second component 3. The projection in connection with the end face 10 of the bolt defines the desired installed position such that the bolt is inserted with the necessary initial tension to ensure that the component 2 and 3 remain securely connected while limiting the transmission of noise and vibrations between the components. The projection or step maybe located in the bottom of the passageway 31 or it may be located on the side of the passageway 31. The step may be formed by reducing the diameter of the end of the passageway 31 at a desired depth. It is also contemplated that the passageway 31 may include a blind hole. According to a preferred embodiment the end of the blind hole then provides the defined stop. The thread for tensioning the bolt may be located in a portion of the blind hole. It is intended that the present invention covers the modifications and variations of the invention, provided they come within the scope of the appended claims.

## Claims

1. A vibration and noise dampening connection mechanism for securing at least two components (2, 3) together, comprising:
a first component (2) having at least one first component passageway (12) formed therein;
a second component (3) having at least one second component passageway (31) formed therein, wherein each of the second component passageway (31) having a thread (9) therein and a stop (11) formed
at least one bolt (8), wherein each of the at least one bolt (8) being received in a corresponding one of the at least one first component passageway (12) and a corresponding one of the at least one second component passageway (31) to secure the first component (2) to the second component (3), wherein each bolt (8) having a bolt end;
at least one molded body (5) formed from an elastomeric material, wherein each of the at least one molded body (5) having a passageway (51) formed therein for receiving a corresponding one of the at least one bolt (8); and
at least one seal member (4) at least partially interposed between the first component (2) and the second component (3),
**characterised in that** the end face (10) of the bolt and the stop (11) within the second component passageway (31) cooperate to establish an inserted end position for the vibration and noise dampening connection mechanism.

2. The vibration and noise dampening connection mechanism according to claim 1, wherein the first component (2) is a valve cover for an engine.

3. The vibration and noise dampening connection mechanism according to claim 1, wherein the second component (3) is a cylinder head for an engine.

4. The vibration and noise dampening connection mechanism according to claim 1, wherein the inserted end position establishes a desired initial tension for the at least one bolt (8).

5. The vibration and noise dampening connection mechanism according to claim 4, wherein the desired initial tension between the first component (2) and the second component (3) can be adjusted by adjusting the position of the stop (11).

6. The vibration and noise dampening connection mechanism according to claim 1, wherein one of the at least one molded body (5) is received within one of the at least one first component passageway (12).

7. The vibration and noise dampening connection according to claim 1, wherein each of the at least one seal member (4) having an opening formed therein for receiving a corresponding one of the at least one bolt (8).

## Patentansprüche

1. Vibrations- und geräuschdämpfender Verbindungsmechanismus zum Aneinanderbefestigen von mindestens zwei Komponente (2, 3), umfassend:
eine erste Komponente (2) mit mindestens einem darin ausgebildeten ersten Komponentendurchgang (12);
eine zweite Komponente (3) mit mindestens einem darin ausgebildeten zweiten Komponentendurchgang (31), wobei jeder zweite Komponentendurchgang (31) ein darin ausgebildetes Gewinde (9) und einen darin ausgebildeten Anschlag (11) aufweist;
mindestens eine Schraube (8) mit jeweils einem Schraubenende, wobei jede der mindestens einen Schraube (8) in einem entsprechenden des mindestens einen ersten Komponentendurchganges (12) und in einem entsprechenden des mindestens einen zweiten Komponentendurchganges (31) aufgenommen ist, um die erste Komponente (2) an der zweiten Komponente (3) zu befestigen;
mindestens einen Formkörper (5), der aus einem elastomeren Material gebildet ist, wobei jeder des mindestens einen Formkörpers (5) einen darin ausgebildeten Durchgang (51) zur Aufnahme einer entsprechenden der mindestens einen Schraube (8) hat; und
mindestens ein Dichtungselement (4), das zumindest teilweise zwischen der ersten Komponente (2) und der zweiten Komponente (3) eingesetzt ist,
**dadurch gekennzeichnet, dass** die Endfläche (10) der Schraube und der Anschlag (11) in dem zweiten Komponentendurchgang (31) zusammenwirken, um eine Endeinsetzposition für den vibrations- und geräuschdämpfenden Verbindungsmechanismus zu erreichen.

2. Vibrations- und geräuschdämpfender Verbindungsmechanismus nach Anspruch 1, wobei die erste Komponente (2) ein Ventildeckel für einen Motor ist.

3. Vibrations- und geräuschdämpfender Verbindungsmechanismus nach Anspruch 1, wobei die zweite Komponente (3) ein Zylinderkopf für einen Motor ist.

4. Vibrations- und geräuschdämpfender Verbindungsmechanismus nach Anspruch 1, wobei die Endeinsetzposition eine gewünschte Anfangsspannung für die mindestens eine Schraube (8) erreicht.

5. Vibrations- und geräuschdämpfender Verbindungsmechanismus nach Anspruch 4, wobei die gewünschte Anfangsspannung zwischen der ersten Komponente (2) und der zweiten Komponente (3) durch Einstellen der Position des Anschlags (11) eingestellt werden kann.

6. Vibrations- und geräuschdämpfender Verbindungsmechanismus nach Anspruch 1, wobei einer des mindestens einen Formkörpers (5) in einem des mindestens einen ersten Komponentendurchganges (12) aufgenommen ist.

7. Vibrations- und geräuschdämpfender Verbindungsmechanismus nach Anspruch 1, wobei jedes des mindestens einen Dichtungselementes (4) eine darin ausgebildete Öffnung zur Aufnahme einer entsprechenden der mindestens einen Schraube (8) aufweist.

## Revendications

1. Un mécanisme de raccordement atténuateur de bruit et de vibrations pour raccorder au moins deux composants (2,3) l'un à l'autre, comprenant :
un premier composant (2), dans lequel au moins un premier passage (12) est formé ;
un second composant (3) dans lequel au moins un second passage (31) est formé, dans lequel chacun des seconds passages (31) présente un filet (9) et une butée (11) formés dans celui-ci ;
au moins un boulon (8), dans lequel chacun d'au moins un boulon (8) est reçu dans un d'au moins un premier passage (12) correspondant et un d'au moins un second passage (31) correspondant afin de raccorder le premier composant (2) au second composant (3), dans lequel chacun d'au moins un boulon (8) présente une extrémité de boulon ;
au moins un corps moulé (5) formé d'un matériau élastomère, dans lequel chacun d'au moins un corps moulé (5) comporte un passage (51) formée dans celui-ci pour recevoir un d'au moins un boulon (8) correspondant ; et
au moins un élément d'étanchement (4) au moins partiellement interposé entre le premier composant (2) et le second composant (3),
dans lequel l'extrémité (10) de boulon et la butée (11) à l'intérieur de chacun d'au moins un seconds passages (31) coopèrent afin d'établir une position finale d'insertion pour le mécanisme de raccordement atténuateur de bruit et de vibrations.

2. Un mécanisme de raccordement atténuateur de bruit et de vibrations selon la revendication 1, dans lequel le premier composant (2) est un couvercle de valves d'un moteur.

3. Un mécanisme de raccordement atténuateur de bruit et de vibrations selon la revendication 1, dans lequel le second composant (3) est une culasse d'un moteur.

4. Un mécanisme de raccordement atténuateur de bruit et de vibrations selon la revendication 1, dans lequel la position finale d'insertion établit une tension initiale désirée d'au moins un boulon (8).

5. Un mécanisme de raccordement atténuateur de bruit et de vibrations selon la revendication 4, dans lequel la tension initiale désirée entre le premier composant (2) et le second composant (3) peut être réglée en réglant la position de la butée (11).

6. Un mécanisme de raccordement atténuateur de bruit et de vibrations, dans lequel un d'au moins un corps moulé (5) est reçu à l'intérieur d'un d'au moins un premier passage (12).

7. Un mécanisme de raccordement atténuateur de bruit et de vibrations, dans lequel chacun d'au moins un élément d'étanchement (4) présente une ouverture formée dans celui-ci afin de recevoir un d'au moins un boulon (8) correspondant.
